# EUROPEAN PATENT APPLICATION

(11) **EP 2 047 759 A1**
(43) Date of publication of application: **15.04.2009**
(21) Application number: 09151486.9
(22) Date of filing: 09.02.2004
(51) Int. Cl.: A23L 1/29, A23C 9/20

(54) **Baby Feeding System**

(30) Priority: 10.02.2003 GB 0302929; 27.02.2003 GB 0304482; 05.08.2003 GB 0318270
(62) Divisional of application: 04709282.0
(71) Applicant: UNIVERSITY COLLEGE LONDON, London WC1N 1EH (GB)
(72) Inventor: Singhal, Atul, Watford, WD17 4SX (GB); Lucas, Alan, Cambridge, CB1 2BY (GB)
(74) Representative: Lucas, Phillip Brian

(57) **Abstract**

In one aspect the invention relates to use of nutrient in the manufacture of a feeding formula for feeding to human infants in the period up to 2 months of age to avoid long-term adverse health effects consequent upon excessive weight gain in that period, wherein said feeding formula comprises 0.5 to 1.00 gram of protein or 25 to 50 kilocalories per 100ml. In another aspect the invention provides an infant feeding formula for feeding to babies in the first two weeks of life which is beneficial for long term health and which contains from 0.5 to 1.00 gram of protein per 100ml of formula or 25 to 50 kilocalories per 100ml of formula.

## Description

The present invention relates to a nutrient and to a feeding system for feeding babies, particularly in the first weeks of life.

For the production of baby foods, in particular milk baby foods or infant milk formulas, respectively, inter alia cow's milk or components from cow's milk are used.
These include for example cow's milk proteins (caseins and whey proteins).

There are many differences between cow's milk and human milk. In the process of manufacturing modern commercial infant formulas, which are also described as formula foods, cow's milk needs to be highly modified. Such formula foods are "artificially" produced, in an attempt to imitate maternal milk as "exactly" as possible and start from animal and/or plant starting materials, these being in particular proteins, fats and carbohydrates.

The fastest growth occurs in the first weeks after birth and current public health advice and practice strongly supports the promotion of infant growth in humans so the infant formula for feeding babies in the first weeks of life have been devised to encourage the growth of babies.

The ability to accelerate growth under favourable conditions, in order to compensate for a period of nutritional deficit, is a strategy common to many developing organisms and is the basis of nutritional rehabilitation of undernourished infants and children.

However in healthy newborn infants, we have found from our studies that fast early growth or "over nutrition" can have long term adverse health effects in humans, particularly with regard to long term vascular health relevant to the development of atherosclerosis and to the later propensity to insulin resistance and non-insulin dependent diabetes (NIDDM). Slower growth as a consequence of relative undernutrition has been suggested to have a beneficial effect, as evidenced by a lower nutrient intake programming lower insulin resistance later in life.

We have also found that formula fed babies have a greater weight gain in the first two weeks of life than breast fed babies and it could be that the suggested long-term beneficial effects of breast-feeding on cardiovascular health could be a consequence of the lower nutrient intake of breast-fed babies during this critical early window. Because most of the acceleration in growth is completed by 2 months of age the long-term benefits of a lower-nutrient intake with breast-feeding on vascular health are likely to occur in this period.

The main components in infant feeding formulas which affect the rate of growth are the protein content of the formula and the energy content of the formula and we have now devised a formula for feeding babies which provides a lower nutrient intake than proposed and existing infant-feeding formulas.

According to the invention there is provided an infant feeding formula which comprises 0.5 to 1.0 grams per 100ml of protein and 25 to 50 kilocalories per 100ml of energy.

These levels of protein and energy are below what has been proposed for infant feeding formulae and such compositions are novel and it is surprising that they can result in better long term health for infants.

In the formula food (i.e. infant feeding formula or baby food) according to the invention, normal proteins, which are already at present used for the production of formula foods can be used as raw materials and thus as proteins for the baby foods. According to the invention, all previously known protein sources, for example proteins, oligopeptides, dipeptides and/or free amino acids, which can also be present in the form of their salts, hydrochlorides, etc., can be used. Thus, bovine caseins, whey proteins and individual proteins thereof (alpha-casein, β-casein, kappa-casein, alpha-lactalbumin, β-lactoglobulin, serum albumin, lactoferrin, immunoglobulins) and combinations of these proteins and also mixtures with other proteins, for example, soya proteins, can be used. Other proteins of animal or plant origin, which are suitable for human nutrition, can also be used.

The total energy can be provided in the form of fats, carbohydrates and proteins of the types which have been used and approved in existing formulas.

The composition of the present invention is fed to the babies as a liquid in water in accordance with existing methods of feeding babies and the present invention also provides a powder composition, which comprises 0.5 to 1.0 grams of protein per 100 ml of formula and 25 to 50 kilocalories per 100 ml of formula when made up to the recommended liquid for feeding to babies.

The formula is typically fed to babies in the first two weeks of life, but may be used up to age 2 months, the period in which most growth acceleration is completed.

We have now also devised a feeding system which helps to ensure this.

According to this aspect of the invention there is provided a container having a plurality of compartments containing a nutrient formula in which each compartment contains sufficient nutrient formula for a baby's daily intake matched to the average volume of breast milk consumed per day.

In each compartment the weight of the formula can be that which is required for the daily feed and this will preferably contain from 10 to 1200m/s /day and more preferably contain 10 to 650 mls. The formula used will be the standard infant formula or preferably the low nutrient formula described above providing 0.5 to 1.0 grams protein per 100ml and 25 to 50 kilocalories per 100ml.

Optionally, instead of the whole of the daily requirement being in one compartment, the daily requirement can be spread over more than one compartment and, preferably, the container is marked appropriately; for example the daily requirement can be divided into eight one eighth aliquots; six one sixth aliquots; four one quarter aliquots; three one third aliquots or two one half aliquots etc. so that, if the baby is on four hour feeds, each compartment can hold one sixth of the daily nutritional requirement.

The formula is typically fed to babies in the first two months of their life, after which they can be fed normal feed, so each container can hold up to two months' supply or contain sufficient compartments so that each container holds two months' supply.

Alternatively there can be more than one container with each container containing a set number of compartments corresponding to a period less than two months e.g. fourteen compartments for containers containing two weeks' supply.

The container can be of any convenient shape and can comprise, for example a sheet of cardboard, plastic or the like with the compartments being formed by a plastic bubble sealed to the sheet.

Alternatively the container can be a tin or box or the like containing sachets of the formula which form the compartments.

In use, the contents of each compartment can be fed to the babies as a liquid in water in accordance with existing methods of feeding babies.

When a baby is to be fed it is easy for the person feeding the baby to know exactly how much formula to give the baby each day so that the baby is not underfed or overfed and the formula is easy and convenient to store and use.

The influence of early undernutrition on long-term health in controlled comparison groups in the human population was determined and the results are shown in the Examples.

### Example 1

Subjects were part of a cohort of 926 who were born preterm and participated in studies that investigated the effects of early diet on later cognitive function and cardiovascular disease. Between 1982 and 1985, babies free from major congenital anomalies and below 1850g in birthweight were recruited in 5 centres (Norwich, Cambridge, Sheffield, Ipswich and King's Lynn). A reference group of subjects of the same age, but born at term and with birthweight above the 10th centile, was also recruited from schools in the same communities as those born preterm.

Infants born preterm were randomly assigned, in two parallel randomised trials, to different diets at birth. These trials compared a nutrient enriched preterm formula (Farley's Osterprem, Farley's Health Care, a division of HJ Heinz Company, Ltd, Stockley Park, Uxbridge, UK) versus the relatively low nutrient diets available at the time. In trial 1 the preterm formula was compared versus banked breast milk donated by unrelated lactating women and in trial 2 the same preterm formula was compared against a standard term formula (Farley's Ostermilk).

Within each trial (1 and 2) the diets were randomly assigned in two strata: A) the trial as diets alone and B) in mothers who elected to express their own milk; the trial diets were assigned as supplements to mother's milk (see Table 1). To compare the nutrient enriched preterm formula versus the lower nutrient diets, as originally planned, trials 1 and 2 (and strata A and B within each trial) have been combined as a balanced addition, thereby preserving randomisation. Random assignment to diets occurred within 48 hours of birth using sealed envelopes. Ethical approval for the trial was obtained from each centre and informed consent obtained from each parent (no parent refused consent).

The assigned diets were given until the infant weighed 2000g or was discharged home. Compared with standard term formula, preterm formula was enriched in protein and fat (2.0g protein and 4.9g fat per 100 ml preterm formula compared to 1.5g protein and 3.8g fat per 100 ml of term formula) but not carbohydrate (7.0g/100ml) in both formulas. Preterm formula was also enriched in vitamins, zinc and copper. For infants fed banked donated milk, protein and energy intakes were estimated from 600 donor milk pools collected from multiple donors (approximately 1.1g protein, 2g fat and 7g carbohydrate per 100 ml). Mother's own expressed milk composition was measured in 4935 complete 24-hour collections (approximately 1.5g protein, 3g fat, and 7g carbohydrate).

Extensive demographic, social, anthropometric, biochemical and clinical data were collected throughout the hospital admission. Infants were weighed daily by trained staff and a mean weight for each week post-natally was calculated to reduce inaccuracies arising from daily fluctuations in weight. Weights were also available at discharge from the neonatal unit, at age 18 months, 9-12 and 13-16 years. Social class was based on the occupation of the parent providing the main financial support for the family (or if both parents worked the father's occupation) according to the Registrar Generals Classification as described.

### Follow-up

The present follow-up at age 13-16 years involved measurement of 4 key variables (blood pressure, flow-mediated endothelial dependent dilation, lipid profile and 32-33 split insulin concentrations (as a measure of insulin resistance - see example 2). Sample size was estimated to exclude a half standard deviation (0.5D) difference in outcomes between randomised dietary groups in each of the 2 trials. We required a maximum sub-sample of around 250 subjects from our original cohort to detect this difference (with two parallel trials) at 80% power and 5% significance; and a minimum sample of around 200 subjects for 70% power and 5% significance.

### FMD Measurement

We measured brachial artery Flow-Mediated endothelial dependent Dilation (FMD), an indicator of endothelial dysfunction relevant to the atherosclerotic process in a population subject to neonatal undernutrition and in healthy controls. This was determined by researchers who were unaware of the subject's gestational age. Subjects were rested supine for 10 minutes prior to the ultrasound scan, which was conducted by a single observer in a temperature controlled (22-24°C), darkened room, between 0900-1300. The brachial artery was imaged in longitudinal section, 5-10 cm above the elbow, using a 7 MHz linear array transducer and an Acuson 128XP/10 system. The transducer was then fixed using a stereotactic clamp and fine position adjustments made when necessary using micrometer screws. A pneumatic cuff was inflated around the forearm to 300 mm Hg for 5 minutes followed by rapid deflation causing a large increase in blood flow (reactive hyperaemia). The resting and post-hyperaemic blood flow velocities in the centre of the imaged artery were determined using pulsed Doppler. End diastolic B-mode images were digitised and stored off-line sequentially every 3 seconds throughout the scan procedure for arterial diameter measurements immediately after the scan procedure (for 1 minute resting, *5* minutes cuff inflation and 3 minutes post cuff deflation). Blood pressure was monitored using an automated oscillometric device (Accutorr, Datascope Corp. New Jersey) and heart rate recorded using a three-lead electrocardiogram (ECG) linked to the ultrasound machine. The reproducibility and detailed methodology for measuring FMD has been previously described. FMD was expressed as the absolute maximal change between pre- and post-hyperaemic brachial artery diameter adjusted for pre-hyperaemic diameter (using regression analysis) and as the absolute change in diameter expressed as a percentage of pre-hyperaemic diameter (FMD%).

### Anthropometry and Biochemistry at Follow-up

Height was measured using a portable stadiometer accurate to 1 mm (Holtain Instruments Ltd., Crymmych, UK) and weight using electronic scales accurate to 0.1 kg (Seca, Hamburg, Germany). Measurements were made using standard protocols by one of two observers trained in the techniques involved. Tanner staging was performed in private by self-assessment using standard Tanner stage photographs. Social class was based on the occupation of the parent providing the main financial support for the family (or if both parents worked the father's occupation) according to the Registrar General's Classification.

Blood was obtained by venepuncture between 0900 and 1100 after an overnight fast. Plasma was separated immediately, stored initially at -20°C and then at -80°C, and thawed only once immediately before analysis. Plasma concentrations of LDL cholesterol were determined using standard laboratory methods.

### Statistical Analysis

Multiple linear regression analyses were used to assess associations between the rate of neonatal and childhood growth (weight gain) and later FMD. Neonatal weight gain was expressed as the absolute value and as the standard deviation score from expected weight (z score) using centiles for infants born preterm. Growth beyond the neonatal period was calculated as the change in z score for weight between discharge and age 18 months, 18 months and 9-12 years, and 9-12 and 13-16 years. All regression analyses were adjusted for potential confounding factors (age, sex, neonatal morbidity -number of days in >30% oxygen and the number of days of ventilation and social class, and for height, weight, serum LDL cholesterol concentration at follow-up, and room temperature). To compare the influence of the early growth on later FMD in adolescents born preterm with term subjects, the preterm population was divided into 2 groups by their early growth (median for weight gain in the first 2 postnatal weeks). Mean FMD in these two groups was compared with control subjects born at term using analysis of variance and p values were adjusted for multiple comparisons using Bonferroni's corrections. Statistical significance was taken as p<0.05 for all analyses.

### Results

Subjects reviewed at age 13-16 years were representative of those recruited at birth in terms of birthweight, gestation, birthweight z score, discharge weight z score, social class and neonatal morbidity. There were no statistically significant differences in mean FMD between randomised dietary groups and this justifies combining all feed groups in the analyses below. Some background characteristics of subjects are given in Table 1a.

### Birthweight for Gestation and Later FMD

FMD was significantly related to birthweight z score and this association remained significant after adjustment for potential confounding factors (age, sex, height, weight, fasting LDL concentrations, room temperature, social class and neonatal morbidity expressed as the number of days of ventilation or days in >30% oxygen) (Table 2).

### Birthweight for Gestation and Early Postnatal Growth

As expected, a low birthweight z score was associated with greater weight gain from birth to the second week postnatally (regression coefficient = -51.6g per z score increase in birthweight; 95% CI: -61.6 to -41.5g; P<0.001), and from birth to discharge (median age 4.4 weeks) (regression coefficient = -75.1g per z score increase in birthweight; 95% CI: -114.9 to -35.3g; P<0.001). These associations remained significant after adjustment for gestation, sex, neonatal morbidity (as above), social class or dietary group (standard versus nutrient enriched diet) (data not presented).

### Postnatal growth and Later FMD

Subjects who showed weight gain in the first 2 weeks of life had lower FMD% in adolescence (mean, SD: 5.5%, 2.6%; n=65) than those who had early weight loss (7.1%, 3.5%, n=137; 95% CI for difference = -2.4% to 0.7%; p<0.001). Similar significant results were obtained after adjustment for birthweight and gestation (p=0.01) (data not presented), or after the analysis was confined to subjects without intra-uterine growth retardation (weight above the 10th centile for gestation) or to subjects with birthweight above the mean for the population (1.4 kg) (data not presented). A greater neonatal growth rate (expressed as the change in z score for weight between birth and discharge or between birth and age 4 weeks) was associated with lower FMD in adolescence and these associations remained significant after adjustment for potential confounding factors (as above) (Table 2). In contrast, growth expressed as the change in z score for weight between discharge and age 18 months, 18 months and 9-12 years, or between 9-12 and 13-16 years was not related to later FMD (Table 2).

To better define the period of neonatal growth that influenced later FMD, the period between birth and discharge was divided into two (between birth and the second week and between the second week and discharge). A greater growth rate between birth and the second week, but not between the second week and discharge, was associated with lower FMD in adolescence and this association remained significant after adjustment for potential confounding factors (as above) (Table 2). Similarly, greater weight gain in the first 2 weeks postnatally was associated with lower FMD in adolescence (Table 1a) independent of birthweight, gestation and possible confounding factors (as above) (Table 2).

To exclude the possibility that postnatal weight loss due to fluid shifts rather than postnatal weight gain influenced later FMD, two further analyses were performed. First, we assessed the association of weight gain between the minimum weight after birth and the weight in the second week with later FMD. Greater weight gain during this period was associated with lower FMD in adolescence independent of birthweight, gestation and potential confounding factors (see above) (Table 2), Second, greater length gain between birth and the second week, unlikely to be related to postnatal fluid loss, was associated with lower FMD in adolescence independent of birthweight, gestation and potential confounding factors (Table 2).

### Early Postnatal growth and Later FMD: Group Comparisons

Mean FMD was greater in adolescents born preterm with weight gain in the first 2 postnatal weeks below the population median (-51.0 g) (mean: 7.4%; SD: 3.4%) than those with weight gain above the median (mean; 5.7%, SD: 2.9%; p<0.001) or control subjects born at term (mean 6.1%; SD 2.8%; p=0.027) (Figure 2). However, mean FMD in preterm subjects with early weight gain above the population median did not significantly differ from control subjects born at term.

### Relative Contribution of Intra-uterine and Early Postnatal Growth to Later FMD

There was no significant interaction between birthweight z score and weight change from birth to the second week on later FMD (p=0.56). All measures of postnatal growth (as shown in Table 2), potential confounding factors (as above), and birthweight z score were included in a stepwise multiple regression model. Only the change in weight between birth and the second week, and room temperature were statistically significantly related to later FMD (regression coefficients =-0.027 mm change per 100g weight increase; 95% CI: -0.042 to -0.0 12 mm; p=0.001; and 0.009 mm change per 1°C rise in room temperature; 95% CI: 0.002 to 0.016 mm; p=0.009).

A greater rate of weight gain during a critical window in the first two weeks after birth was associated with endothelial dysfunction up to 16 years later. Our data indicates in humans that rapid growth immediately after birth has adverse consequences later in life. FMD was greater in preterm infants who had a slower rate of growth than in those with the greatest growth, or, importantly, in control subjects born at term (FMD in these latter 2 groups did not significantly differ). Therefore our findings now show that growth impairment during a brief window after birth may have long-term benefits to health. Our data shows that improvement in some aspects of long-term health can be achieved by early undernutrition. The first 2 weeks after birth appeared to be the sensitive period. Adolescents with the greatest weight gain during this period had 4.0% lower FMD than those with the lowest weight gain; a substantial effect on FMD, similar to that of insulin dependent diabetes (4%) and smoking (6%) in adults.

### Example 2 The effect of Undernutrition on Insulin Resistance.

The subjects were the same as in Example 1 and subjected to the same regime and trials and 32-33 split insulin concentrations (as a measure of insulin resistance was measured).

Sample size was estimated to exclude half a standard deviation in outcomes between randomised dietary groups in each of the trials and we required a maximum sub-sample of around 250 subjects from our original cohort to detect this difference (with two parallel trials) at 80% power and 5% significance; and a minimum sample of around 200 subjects for 70% power and 5% significance. A subset of 216 subjects, which met our minimum criteria, agreed to participate at our initial attempt at recruitment and were found to be representative of the original population. For comparison of a nutrient enhanced versus standard neonatal diet (trials 1 and 2 combined) this sample was sufficient to detect a 0.4 SD difference in fasting 32-33 split proinsulin concentration between randomised groups with 80% power and at 5% significance. Ethical approval for the follow-up study was obtained from national and local research ethics committees and written consent was obtained from all children, parents and their guardians.

### Biochemistry

Blood was obtained by venepuncture between 0900 and 1100 after an overnight fast. Plasma was separated immediately, stored initially at -20°C and then at -80°C, and thawed only once immediately before analysis. Glucose concentration was measured using a hexokinase method. 32-33 split proinsulin, intact proinsulin and insulin concentrations were measured in the laboratories of Professor Hales in Cambridge. Insulin concentration was measured using a one step chemiluminescent immunoenzymatic assay. Cross-reactivity with intact proinsulin was less than 0.2% at 400pmol/L and with 32-33 split proinsulin, less than 1% at 400pmol/L. Intact proinsulin and 32-33 split proinsulin concentrations were assayed using a time resolved fluorometric assay (Delfia). The solid phase antibody, bound to a microtitre plate, was the same in each case. The labeled antibody used in the 32-33 split proinsulin assay was donated by Dako Diagnostics Ltd., Intact proinsulin was supplied by the National Institute for Biological Standards and Controls (1st International Reagent 84/611), and chromotography purified 32-33 split proinsulin donated by Lilly Research Labs. The antibodies were labeled with Europium using the Delfia Europium labeling kit 1244-302 (Wallac, UK Ltd). The intact proinsulin assay typically shows less than 1% cross-reactivity with insulin and 32-33 split proinsulin at 2500 pmol/L and 400 pmol/L respectively. The 32-33 split proinsulin assay shows less than 1% cross-reactivity with insulin at 2500 pmol/L.

### Statistical Analysis

The principal outcome was 32-33 split proinsulin concentration. Comparisons of normally distributed variables between randomised groups were made with Student's t test. Simultaneous multiple linear regression analyses were used to adjust differences between randomised groups for possible baseline differences. Infants born preterm and randomised to the lower nutrient diet were compared to adolescents born at term using Student's t test.

Multiple linear regression analyses were used to assess associations between the rate of neonatal and childhood growth (weight gain) and later insulin concentrations. Neonatal weight gain was expressed as the absolute value and as the standard deviation score from expected weight (z score) using centiles for infants born preterm. Growth beyond the neonatal period was calculated as the change in z score for weight between discharge and age 18 months, 18 months and 9-12 years, and 9-12 and 13-16 years. Current body mass index (BMI) was expressed as the standard deviation score from expected BMI (z score) using national reference centiles. The distributions of 32-33 split proinsulin, proinsulin, and insulin concentrations were log transformed and then multiplied by 100. Therefore the log standard deviation multiplied by 100 represented the coefficient of variation and the coefficient in regression analyses represented the mean percentage change in insulin concentration per unit change in independent variable. Regression analyses were adjusted for potential confounding factors (sex, age, and BMI z score at current follow-up and neonatal morbidity -number of days in >30% oxygen and the number of days of ventilation- and social class at birth). Statistical significance was taken as p<0.05 for all significance tests, which were two tailed.

### Results

### Analyses in Adolescents Born Preterm

Subject Characteristics: There were no statistically significant differences in birthweight, gestation, standard deviation scores for birth and discharge weight, and clinical parameters between children who were or were not reviewed at age 13-16 years (Table 1). As expected, the percentage of adolescents from a non-manual social background was greater at follow-up than at birth for both trials (Table 1). However, there were no significant differences in neonatal characteristics, anthropometry, Tanner stage (median 4, inter-quartile range: 4-5), or social class between randomised dietary groups at follow-up (Table 3).

### Main Effect: Comparison Between Randomised Dietary Groups

As planned, adolescents born preterm and randomised to a nutrient enriched diet (preterm formula) were compared with those randomised to the lower nutrient diet (banked breast milk or standard term formula). Fasting 32-33 split proinsulin (but not intact proinsulin, insulin or glucose concentration) was greater in adolescents randomised to the nutrient enriched diet than those randomised to one of the two lower nutrient diets (Table 4). The effect sizes were similar in adolescents randomised to preterm formula compared to banked breast milk (trial 1), or preterm formula versus term formula (trial 2) (Table 4) as evidenced by the lack of a significant diet by trial interaction for later 32-33 split proinsulin concentration (p=0.5), intact proinsulin (p=0.3) and insulin concentration (p =0.8). This further justifies combining trials 1 and 2. There was no sex difference in the effect of diet on fasting 32-33 split proinsulin concentration (the interaction between diet and sex on fasting 32-33 split proinsulin concentrations was not statistically significant; p=0.07).

In an explanatory analyses, the effect of diet on 32-33 split proinsulin concentrations remained significant after adjustment for birthweight and gestation, and potential confounding factors (see statistical methods above) (regression coefficient = 18.4%; 95% CI of difference: 3.5% to 33.2%; p=0.016).

In the subsequent analyses only 32-33 split and intact proinsulin, but not insulin or glucose concentrations were significantly related to the early factors of interest (other data are not presented).

### Effect of Early Postnatal Growth Programme Later Proinsulin Concentrations

Because diet has a major influence on neonatal growth (see Table 3) we tested the hypothesis that postnatal growth programmed later 32-33 split and intact proinsulin concentrations. This was done in two ways: taking early postnatal growth as a continuous variable or as a dichotomous variable.

A greater neonatal growth rate (expressed as a continuous variable: the change in z score for weight between birth and discharge) was associated with higher fasting 32-33 split proinsulin and intact proinsulin in adolescence independent of birthweight, gestation and potential confounding factors (see statistical methods above) (Table 5). To better define the period of neonatal growth that influenced later proinsulin concentrations the period between birth and discharge was divided into two (between birth and the second week, and between the second week and discharge). Only growth in the first 2 weeks was associated with higher fasting 32-33 split and intact proinsulin concentrations in adolescence (Table 5).

Neonatal growth was taken as a dichotomous variable by comparing subjects who showed weight gain in the first 2 weeks of life (n=60) with those who had weight loss. Fasting 32-33 split proinsulin concentration was greater in subjects with early neonatal weight gain (geometric mean: 7.6 pmol/L, Coefficient of Variation, CV: 60%) compared to those with weight loss (5.9 pmol/L, CV:54%; mean difference: 24%; 95% CI for difference = 6.6% to 41.5%; p=0.007). Similar results were obtained for intact proinsulin (p=0.0003) (data not shown). The differences in 32-33 split proinsulin or intact proinsulin concentrations between neonatal weight gain groups remained significant after adjustment for birthweight and gestation (p=0.02 for 32-33 split proinsulin and p=0.03 for intact proinsulin).

To exclude the possibility that postnatal weight loss due to fluid shifts rather than postnatal weight gain influenced later fasting insulin concentrations, we assessed the association of weight gain between the minimum weight after birth and the weight in the second week with later proinsulin concentrations. Greater weight gain during this period was associated with higher 32-33 split and intact proinsulin concentration in adolescence independent of birthweight, gestation and potential confounding factors (as above) (Table 5).

To assess the influence of postnatal growth beyond the neonatal period on later proinsulin concentrations, growth was expressed as the change in z score for weight between discharge and age 18 months, 18 months and 9-12 years, or between 9-12 and 13-16 years. These variables were not significantly related to later, 32-33 split or intact proinsulin concentrations. Furthermore more rapid growth in the first 2 weeks post-natally was associated with greater 32-33 split proinsulin concentration in adolescence, with or without adjustment for current BMI z score (data not presented). Thus the influence of early growth on later 32-33 split proinsulin concentration was independent of weight gain during childhood.

### Effect of Antenatal Growth Programme Proinsulin Concentrations

To explore the influence of antenatal growth we assessed the associations between birthweight for gestation and later proinsulin concentrations. Only fasting proinsulin (but not 32-33 split proinsulin) concentration in adolescence was negatively associated with birthweight z score independent of potential confounding factors (as above) (Table 5).

Our prospective experimental study was designed to assess the influence of early nutrition on later cardiovascular risk factors. We found that adolescents born preterm who were randomised to a lower nutrient diet, now recognised as suboptimal in terms of growth, had lower fasting 32-33 split proinsulin concentration, a marker of insulin resistance, than those randomised to a nutrient rich diet. Further analysis suggested that these dietary effects, seen up to 16 years after dietary randomisation were likely to operate by influencing neonatal growth rate. We suggest therefore that a reduced early growth rate as a consequence of relative undernutrition programmes a lower insulin resistance and, by inference, a lower propensity to NIDDM.

**Table 1**

| **Some Characteristics of Children Born Preterm who were Followed-up and not Followed-up in Adolescence¹** | | | | | | | | |
|---|---|---|---|---|---|---|---|---|
| | **Trial 1: Preterm Formula versus Banked Breast Milk** | | | | **Trial 2: Preterm Formula versus Term Formula** | | | |
| **Variable** | **Followed-up** | | **Not Followed-up** | | **Followed-up** | | **Not Followed-up** | |
| | (n=130)² | | (n=372) | | (n=86) | | (n=338) | |
| | Mean | SD | Mean | SD | Mean | SD | Mean | SD |
| Growth | | | | | | | | |
| Birthweight (kg) | 1.4 | 0.3 | 1.4 | 0.3 | 1.4 | 0.3 | 1.4 | 03 |
| (range) | (0.7 to 1.8) | | (0.6 to1.8) | | (0.7 to 1.8) | | (0.5 to 1.8) | |
| Gestation (weeks) | 31.1 | 2.6 | 30.7 | 2.9 | 30.7 | 2.8 | 30.8 | 2.9 |
| (range) | (26 to 38) | | (25 to 39) | | (26 to 37) | | (24 to 39) | |
| Birthweight z score | -1.0 | 1.2 | -0.7 | 1.3 | -0.8 | 1.1 | -0.7 | 1.3 |
| Discharge weight z score | -2.1 | 1.0 | -2.0 | 1.1 | -2.1 | 1.0 | -2.1 | 1.0 |
| | | | | | | | | |

| Demographic/clinical | | | | | | | | |
|---|---|---|---|---|---|---|---|---|
| Social class | 3.4 | 1.5 | 3.6 | 1.9 | 3.5 | 1.6 | 3.8 | 1.8 |
| No. (%) non-manual³ | 53 (41) | | 111 (30)⁴ | | 35 (40) | | 97 (29)⁴ | |
| Apgar at 5 minutes of age | 8.3 | 1.7 | 8.0 | 1.9 | 7.8 | 1.8 | 8.0 | 2.0 |
| Days ventilation⁵ | 0 | 0-4 | 1 | 0-5 | 1 | 0-4 | 1 | 0-6 |
| Days in >30% oxygen⁵ | 2 | 0-7 | 4 | 1-8 | 2 | 0-16 | 3 | 0-10 |

| | | | | | | | | |
|---|---|---|---|---|---|---|---|---|
| ¹The total number of subjects was 926. ²Slight loss of n for some variables. ³Analysed by Chi-squared; ⁴p=0.02; ⁵Median, inter-quartile range, analysed by Mann-Whitney. There were no significant differences between groups in either trial expect for the percentage from a manual versus non-manual social class. | | | | | | | | |

**Table 1a**

| | **Some Subject Characteristics** | | | | | | | |
|---|---|---|---|---|---|---|---|---|
| | **Term Controls** | | **Preterm** | | **Preterm Subjects with Early Weight Gain¹** | | | |
| | (n=61) | | (n=216) | | **On or below median** (102) | | **Above median** (101) | |
| **At Follow-up** | | | | | | | | |
| Sex: Male (%) | 29 (47) | | 97 (45) | | 49 (48) | | 40 (40) | |
| Age (years) | 14.7 | 0.8 | 15.0 | 0.9 | 15.0 | 0.9 | 15.1 | 0.9 |
| BMI (kg/m²) | 21.6 | 4.1 | 21.2 | 3.7 | 21.0 | 3.2 | 21.3 | 3.7 |
| Social code | 3.3 | 1.5 | 3.2 | 1.3 | 3.3 | 1.3 | 3.2 | 1.4 |
| | | | | | | | | |

| **Neonatal** | | | | | | | | |
|---|---|---|---|---|---|---|---|---|
| Birthweight (kg) | 3.5 | 0.6 | 1.4 | 0.3 | 1.3 | 0.3 | 1.4 | 0.3 |
| Gestation (weeks) | 40.0 | 1.2 | 31.0 | 2.7 | 30.0 | 2.2 | 32.0 | 2.6 |
| Z score birthweight | 0.04 | 0.8 | -0.9 | 1.2 | -0.3 | 0.9 | -1.5 | 1.0 |
| Z score discharge weight | - | - | -2.1 | 0.9 | -2.0 | 0.9 | -2.2 | 0.9 |
| Days ventilation² | - | - | 0.0 | 4.0 | 3.0 | 7.0 | 0.0 | 1.0 |
| Days in 30% O₂² | - | - | 2.0 | 8.0 | 6.0 | 16.0 | 1.0 | 2.0 |
| | | | | | | | | |

| **Neonatal Growth** | | | | | | | | |
|---|---|---|---|---|---|---|---|---|
| Weight change: | | | | | | | | |
| 0-2 wt (g)³ | - | - | -41.5 | 102.6 | -121.9 | 56.1 | 39.8 | 69.2 |
| Minimum-2wk (g)³ | - | - | 97.6 | 52.5 | 68.5 | 32.7 | 127.0 | 52.4 |

| Change in weight z score between: | | | | | | | | |
|---|---|---|---|---|---|---|---|---|
| 1.Birth and discharge | - | - | -1.2 | 0.8 | -1.7 | 0.7 | -0.7 | 0.5 |
| 2.Birth and 2 weeks | - | - | -1.0 | 0.5 | -1.4 | 2.9 | -0.7 | 2.8 |
| | | | | | | | | |

| **Endothelial Function** | | | | | | | | |
|---|---|---|---|---|---|---|---|---|
| Arterial Diameter | 3.7 | 0.6 | 3.5 | 0.5 | 3.5 | 0.5 | 3.5 | 0.5 |
| FMD%⁴ | 6.1 | 2.8 | 6.6 | 3.3 | 7.4 | 3.4 | 5.8 | 2.9 |
| Reactive Hyperaemia (%) | 683 | 362 | 682 | 314 | 651 | 295 | 691 | 325 |

| | | | | | | | | |
|---|---|---|---|---|---|---|---|---|
| ¹Pretem subjects with weight gain in the first 2 postnatal weeks above and below the median for the population; ²Median and inter-quartile range; ³Weight change (g) = mean weight in second week minus birthweight (or minimum weight); ⁴FMD% - (Change in arterial diameter/pre-hyperaemic diameter) x 100. | | | | | | | | |

**Table 2**

| **Regression Analyses of Endothelial Function in 216* Subjects (post-hyperaemic change in brachial artery diameter) (mm)** | | | | | | |
|---|---|---|---|---|---|---|
| **Variable** | **Unadjusted** | | | **Adjusted¹** | | |
| | Regression Coefficient (mm) | 95% CI | p | Regression Coefficient (mm) | 95% CI | p |
| Birthweight z score | 0.013 | 0.001 to 0.026 | 0.035 | 0.016 | 0.002 to 0.029 | 0.021 |

| Change in weight z score between: | | | | | | |
|---|---|---|---|---|---|---|
| 1. Birth and discharge | -0.026 | -0.046 to -0.007 | 0.007 | -0.030 | -0.055 to -0.006 | 0.016 |
| Birth and 4 weeks | -0.037 | -0.066 to -0.008 | 0.012 | -0.035 | -0.068 to -0.002 | 0.037 |
| Birth and 2 weeks | -0.057 | -0.087 to -0.024 | 0.001 | -0.062 | -0.096 to -0.028 | <0.001 |
| 2. 2 weeks and discharge | -0.025 | -0.056 to 0.005 | 0.10 | -0.013 | -0.052 to 0.026 | 0.52 |
| 3. Discharge and 18 months | 0.006 | -0.006 to 0.018 | 0.34 | 0.007 | -0.007 to 0.021 | 0.35 |
| 4. 18 months and 9-12 years | -0.005 | -0.019 to 0.008 | 0.46 | -0.009 | -0.023 to 0.006 | 0.27 |
| 5. 9-12 years and 13-16 years | -0.003 | -0.027 to 0.022 | 0.82 | -0.007 | -0.034 to 0.019 | 0.57 |
| | | | | | | |

| 2Weight change between | | | | | | |
|---|---|---|---|---|---|---|
| 1. Birth and 2^{nd} week (100g) | -0.026 | -0.040 to -0.012 | <0.001 | -0.024 | -0.043 to-0.006 | 0.009 |
| 2. Minimum weight and 2^{nd} week (100g) | -0.037 | -0.065 to -0.009 | 0.010 | -0.035 | -0.069 to 0.000 | 0.050 |
| ²Length change between birth and 2^{nd} week (cm)³ | -0.002 | -0.004 to 0.000 | 0.03 | -0.002 | -0.004 to 0.000 | 0.041 |

Each line represents a separate regression model. All analyses adjusted for pre-hyperaemic brachial artery diameter. *Slight loss of n in some models. ¹Adjusted for: age, sex, height, weight, fasting serum LDL cholesterol concentrations, room temperature, social class, and indices of neonatal morbidity (number of days of ventilation or days in >30% oxygen). ²Adjusted for confounding variables (as above) and birthweight and gestation. ³n=100

**Table 3**

| **Comparison of Subject Characteristics of Infants born Preterm and Randomised to Different Diets at Birth** | | | | | | | | | | | | |
|---|---|---|---|---|---|---|---|---|---|---|---|---|
| | **Trial 1 & 2 Combined** | | | | **Trial 1** | | | | **Trial 2** | | | |
| **Variable** | **Preterm Formula Vs 'Lower Nutrient' Diet¹** | | | | **Preterm Formula Vs Banked Breast Milk** | | | | **Preterm Formula Vs Term Formula** | | | |
| | (n=106) | | (n=110) | | (n = 64) | | (n = 66) | | (n=42) | | (n=44) | |
| | Mean | SD | Mean | SD | Mean | SD | Mean | SD | Mean | SD | Mean | SD |
| Sex: No. males (%)² | 45 (42) | | 52 (57) | | 32 (50) | | 32 (49) | | 13 (31) | | 20 (45) | |
| Age (years) | 15.0 | 0.9 | 15.0 | 0.9 | 15.1 | 1.0 | 15.2 | 0.9 | 14.8 | 0.8 | 14.8 | 0.8 |
| Weight (kg) | 55.0 | 11.3 | 55.8 | 10.0 | 55.0 | 12.2 | 53.9 | 9.9 | 54.9 | 10.1 | 58.6 | 9.7 |
| Height (cm) | 161.2 | 8.6 | 161.8 | 9.7 | 160.8 | 9.4 | 161.3 | 10.2 | 161.9 | 7.3 | 162.5 | 8.9 |
| Body mass index (kg/m²) | 21.0 | 3.6 | 21.3 | 3.8 | 21.1 | 3.9 | 20.8 | 3.9 | 20.9 | 3.2 | 22.2 | 3.5 |
| Sum of skinfolds (mm)³ | 52 | 30-74 | 50 | 34-71 | 52 | 30-77 | 44 | 30-62 | 52 | 31-73 | 57 | 47-78 |

| **Neonatal** | | | | | | | | | | | | |
|---|---|---|---|---|---|---|---|---|---|---|---|---|
| Social class | 3.4 | 1.4 | 3.5 | 1.7 | 3.5 | 1.3 | 3.4 | 1.7 | 3.4 | 1.7 | 3.6 | 1.6 |
| No. (%) non-manual² | 43 (41) | | 45 (41) | | 25 (39) | | 28 (42) | | 18 (43) | | 17 (39) | |
| Birthweight (kg) | 1.4 | 0.3 | 1.4 | 0.3 | 1.3 | 0.3 | 1.4 | 0.3 | 1.4 | 0.4 | 1.3 | 0.3 |
| Gestation (weeks) | 31.1 | 2.7 | 30.9 | 2.7 | 31.2 | 2.6 | 31.1 | 2.5 | 30.9 | 2.8 | 30.6 | 2.9 |
| Apgar at 5 minutes of age | 8.3 | 1.8 | 7.9 | 1.8 | 8.4 | 1.9 | 8.2 | 1.6 | 8.2 | 1.5 | 7.5 | 1.9 |
| Days in >30% Oxygen³ | 2 | 0-9 | 3 | 0-7 | 3 | 0-7 | 2 | 0-7 | 2 | 0-17 | 4 | 0-15 |
| Days of ventilation³ | 0 | 0-4 | 0 | 0-4 | 0 | 0-4 | 0 | 0-3 | 1 | 0-4 | 1 | 0-4 |
| z score birthweight | -0.9 | 1.2 | -0.8 | 1.2 | -1.1 | 1.2 | -0.8 | 1.2 | -0.7 | 1.1 | -0.8 | 1.1 |
| z score discharge weight | -1.9 | 1.0 | -2.2 | 0.9* | -2.0 | 1.0 | -2.1 | 1.0 | -1.8 | 0.9 | -2.3 | 0.8* |
| | | | | | | | | | | | | |

| **Growth** | | | | | | | | | | | | |
|---|---|---|---|---|---|---|---|---|---|---|---|---|
| Change in weight z score between: | | | | | | | | | | | | |
| Birth and discharge | -1.0 | 0.7 | -1.4 | 0.7*** | -0.9 | 0.7 | -1.3 | 0.6** | -1.1 | 0.8 | -1.5 | 0.8* |
| Birth and 2 weeks | -1.0 | 0.5 | -1.1 | 0.4** | -0.9 | 0.5 | -1.1 | 0.4* | -1.0 | 0.5 | -1.2 | 0.5 |
| 2 weeks and discharge | -0.01 | 0.5 | -0.3 | 0.5*** | 0.05 | 0.5 | -0.2 | 0.4** | -0.1 | 0.5 | -0.4 | 0.5* |
| | | | | | | | | | | | | |

| **Weight change between** | | | | | | | | | | | | |
|---|---|---|---|---|---|---|---|---|---|---|---|---|
| Birth and 2^{nd} week (g) | -18.4 | 108.2 | -62.6 | 92.7** | -12.5 | 115.2 | -57.9 | 86.0* | -27.1 | 97.8 | -70.0 | 103.2 |
| Minimum weight and 2^{nd} week (g) | 109.5 | 57.8 | 86.7 | 44.6** | 113.7 | 60.6 | 96.2 | 41.8 | 103.3 | 53.7 | 71.6 | 45.3** |

| | | | | | | | | | | | | |
|---|---|---|---|---|---|---|---|---|---|---|---|---|
| ¹Lower nutrient diet = banked breast milk or standard term formula;²Chi-squared analysis;³Median,inter-quartile range, analysed by Mann-Whitney; *p<0.05; **p<0.01; ***p<0.001 | | | | | | | | | | | | |

**Table 4**

| **Early Diet and Fasting Proinsulin, Insulin and Glucose Concentrations in Adolescents born Preterm Randemised Diets** | | | | | | | | | |
|---|---|---|---|---|---|---|---|---|---|
| **Variable** | n¹ | Geometric Mean | CV (%) | n | Geometric Mean | CV(%) | Mean Difference (%) | 95% CI of Difference (%) | p-value |
| **Trials 1 & 2 combined** | 106 | *Preterm Formula* | | 110 | *'Lower Nutrient' Diet*² | | | | |
| 32-33 Split proinsulin (pmol/L) | | 7.2 | 56 | | 5.9 | 55 | 20.6 | 5.0 to 36.3 | 0.01 |
| Proinsulin (pmol/L) | | 4.3 | 49 | | 4.1 | 47 | 6A | -7.2 to 20.0 | 0.4 |
| Insulin (pmol/L) | | 45.8 | 55 | | 44.8 | 60 | 2.0 | -14.2 to 18.1 | 0.8 |
| | | | | | | | | | |
| Glucose (mmol/L)³ | | 4.7 | 0.5 | | 4.7 | 0.6 | 0.08 | -0.07 to 0.2 | 0.3 |
| | | | | | | | | | |

| **Trial 1** | 64 | *Preterm Formula* | | 66 | *Banked Breast Milk* | | | | |
|---|---|---|---|---|---|---|---|---|---|
| 32-33 Split proinsulin (pmol/L) | | 6.8 | 56 | | 5.7 | 57 | 18.7 | -1.7 to 39.0 | 0.07 |
| Proinsulin (pmol/L) | | 4.3 | 52 | | 4.3 | 49 | 0.3 | -17.8 to 18.5 | 0.9 |
| Insulin (pmol/L) | | 42.4 | 57 | | 42.5 | 67 | -0.3 | -22.6 to 22.0 | 0.9 |
| | | | | | | | | | |
| Glucose (mmol/L)³ | | 4.7 | 0.5 | | 4.7 | 0.4 | 0.02 | -0.1 to 0.2 | 0.8 |
| | | | | | | | | | |

| **Trial 2** | 42 | *Preterm Formula* | | 44 | *Term Formula* | | | | |
|---|---|---|---|---|---|---|---|---|---|
| 32-33 Split proinsulin (pmol/L) | | 7.8 | 56 | | 6.2 | 52 | 23.1 | -1.8 to 48.0 | 0.07 |
| Proinsulin (pmol/L) | | 4.3 | 46 | | 3.7 | 42 | 16.7 | -3.7 to 37.2 | 0.1 |
| Insulin (pmol/L) | | 51.8 | 50 | | 49.4 | 43 | 4.7 | -16.9 to 26.2 | 0.7 |
| | | | | | | | | | |
| Glucose (mmol/L)³ | | 4.8 | 0.5 | | 4.6 | 0.8 | 0.2 | -0.1 to 0.5 | 0.2 |

| | | | | | | | | | |
|---|---|---|---|---|---|---|---|---|---|
| ¹Some loss of n for some comparisons between randomised groups; ²Lower nutrient diet = banked breast milk or standard term formula; ³arithmetic mean and standard deviation. All values are unadjusted. | | | | | | | | | |

**Table 5**

| **Regression Analyses of Early Growth and Later Proinsulin Concentrations in Adolescents born Preterm** | | | | | | |
|---|---|---|---|---|---|---|
| **Variable** | **Unadjusted** | | | **Adjusted¹** | | |
| | Regression Coefficient (%) | 95% CI (%) | p | Regression Coefficient (%) | 95% CI (%) | p |
| 32-33 Split Proinsulin | | | | | | |
| Birthweight z score | -5.9 | -12.6 to 0.7 | 0.08 | -4.9 | -11.3 to 1.5 | 0.1 |
| | | | | | | |

| Change in weight z score between² | | | | | | |
|---|---|---|---|---|---|---|
| Birth and discharge | 13.6 | 3.2 to 24.1 | 0.01 | 21.1 | 5.8 to 36.4 | 0.007 |
| Birth and 2 weeks | 26.7 | 9.5 to 43.9 | 0.003 | 44.0 | 18.4 to 69.6 | 0.0009 |
| 2 weeks and discharge | 8.4 | -8.6 to 25.4 | 0.3 | 8.6 | -11.7 to 28.8 | 0.4 |
| | | | | | | |

| Weight change between² | | | | | | |
|---|---|---|---|---|---|---|
| 1. Birth and 2^{nd} week (per 100g) | 13.2 | 5.4 to 20.9 | 0.001 | 15.6 | 6.3 to 24.8 | 0.001 |
| 2. Minimum weight and 2^{nd} week | 19.0 | 3.3 to 34.8 | 0.02 | 22.9 | 5.4 to 40.4 | 0.01 |
| (per 100g) | | | | | | |
| | | | | | | |
| Proinsulin | | | | | | |
| Birthweight z score | -7.2 | -12.9 to -1.6 | 0.01 | -5.9 | -11.5 to -0.2 | 0.04 |
| | | | | | | |

| Change in weight z score between² | | | | | | |
|---|---|---|---|---|---|---|
| Birth and discharge | 16.0 | 7.1 to 24.8 | 0.0005 | 14.9 | 1.5 to 28.2 | 0.03 |
| Birth and 2 weeks | 31.2 | 16.9 to 45.5 | <0.0001 | 37.3 | 15.4 to 59.1 | 0.0009 |
| 2 weeks and discharge | 11.0 | -3.5 to 25.4 | 0.1 | 2.3 | -15.0 to 19.5 | 0.8 |
| | | | | | | |

| Weight change between² | | | | | | |
|---|---|---|---|---|---|---|
| 1. Birth and 2^{nd} week (per 100g) | 15.1 | 8.7 to 21.5 | <0.0001 | 14.9 | 7.1 to 22.7 | <0.0002 |
| 2. Minimum weight and 2^{nd} week (per 100g) | 28.6 | 15.5 to 4.2 | <0.0001 | 24.5 | 9.6 to 39.4 | 0.001 |

| | | | | | | |
|---|---|---|---|---|---|---|
| Each line represents a separate regression model. ¹Adjusted for: age, sex, current body mass index z score, social class indices of neonatal morbidity (number of days of ventilation or days in >30% oxygen). ²Adjusted for confounding factors (as above) together with birthweight and gestation. Small loss of n in some models. | | | | | | |

## Claims

1. Use of nutrient in the manufacture of a feeding formula for feeding to human infants in the period up to 2 months of age to avoid long-term adverse health effects consequent upon excessive weight gain in that period, wherein said feeding formula comprises 0.5 to 1.00 grams of protein or 25-50 kilocalories per 100ml.

2. The use of claim 1, wherein said formula is for avoidance of long-term adverse health effects consequent upon excessive weight gain in the first two weeks of life.

3. The use of claim 1 or 2, wherein said long-term adverse health-effects are vascular.

4. The use of claim 3, wherein said long-term adverse health effects are development of atherosclerosis.

5. The use of claim 1 or 2, wherein said long-term adverse health effects are insulin resistance and non-insulin dependent diabetes (NIDBM).

6. The use of any preceding claim, in which protein is selected from bovine caseins, whey proteins and individual proteins thereof, alpha-casein, β-casein, kappa-casein, alpha-lactalbumin, β-lactaglobulin, serum albumin, lactoferrin, immmunoglobins and combinations of these proteins and also mixtures of these with other proteins.

7. The use of any preceding claim, in which the energy is in the form of carbohydrate and/or fat.

8. An infant feeding formula for feeding to infants up to two months of age to inhibit excessive weight gain, which comprises 0.5 to 1.00 grams of protein per 100ml of formula or 25 to less than 50 kilocalories per 100ml of formula.

9. The formula of claim 8, in which the protein is selected from bovine caseins, whey proteins and individual proteins thereof, alpha-casein, β-casein, kappa-casein, alpha-lactalbumin, β-lactoglobulin, serum albumin, lactoferrin, immunoglobulins and combinations of these proteins and also mixtures of these with other proteins.

10. The formula of claim 8 or 9, in which the energy is in the form of carbohydrate and/or fat.
